# FASCICULE DE BREVET EUROPEEN

(11) **EP 3 227 154 B1**
(45) Date de publication et mention de la délivrance du brevet: **16.09.2020**
(21) Numéro de dépôt: 15805608.5
(22) Date de dépôt: 20.11.2015
(51) Int. Cl.: B60W 20/00, B60W 30/182, B60W 50/00, B60W 40/107

(54) **PROCÉDÉ DE CONTRÔLE DES CHANGEMENTS D'ÉTAT D'UNE CHAÎNE CINÉMATIQUE**
VERFAHREN FÜR STEUERUNG VON ZUSTANDSÄNDERUNGEN EINES ANTRIEBS
METHOD FOR CONTROLLING STATE CHANGES OF A DRIVETRAIN

(30) Priorité: 02.12.2014 FR 1461765
(43) Date de publication de la demande: 11.10.2017
(73) Titulaire: Renault s.a.s, 92100 Boulogne-Billancourt (FR)
(72) Inventeur: LE-CAM, Florent, 91510 Lardy (FR); ROUDEAU, Frédéric, 94400 Vitry sur Seine (FR); LEFEVRE, Aurélien, 92190 Meudon (FR)
(86) Numéro de dépôt international: PCT/FR2015/053162
(87) Numéro de publication internationale: WO 2016/087741

(56) Documents cités:
- WO-A1-2013/110706
- FR-A1- 2 911 567
- FR-A1- 2 928 122
- FR-A1- 3 001 188

## Description

La présente invention concerne les stratégies de contrôle implémentées dans les unités de calcul des groupes motopropulseurs (GMP).

Elle trouve une application privilégiée, mais non limitative, sur des groupes motopropulseurs comprenant au moins un moteur thermique et une machine électrique de traction.

Plus précisément, cette invention a pour objet un procédé de contrôle des changements d'état d'une chaîne cinématique de véhicule reliant au moins un moteur thermique et/ou une machine électrique aux roues du véhicule par l'intermédiaire d'une transmission, assurant le transfert du couple du moteur thermique et/ou de la machine électrique en direction des roues, sur un ou plusieurs rapports de démultiplication.

Ces états sont définis par différentes combinaisons de coupleurs et de réducteurs, pour assurer le transfert du couple du moteur thermique et/ou de la machine électrique en direction des roues, sur un ou plusieurs rapports de démultiplication. L'état d'une chaîne cinématique peut donc se définir par une combinaison de coupleurs et de réducteurs sollicités. La consigne d'état de la chaîne cinématique vise à optimiser le point de fonctionnement du GMP. Sur un GMP thermique, un état de chaîne cinématique peut être simplement défini par l'engagement d'un rapport et la position (ouverte ou fermée) d'un embrayage d'entrée entre le moteur et la boîte. Sur un GMP hybride, sa définition est forcément plus complexe, parce qu'elle doit intégrer l'état d'une ou plusieurs machines électriques qui peuvent propulser le véhicule par le même, ou par un autre, essieu, que le moteur thermique.

Sur un véhicule hybride, le comportement acoustique du véhicule dépend, entre autres, de la répartition entre la puissance électrique et la puissance thermique. L'agrément de conduite, lié aux performances du GMP, dépend aussi de l'état de charge de la batterie de traction, puisque seul le moteur thermique est utilisable lorsqu'elle est déchargée. Enfin, les lois de gestion d'énergie (LGE), qui déterminent sur chaque point de fonctionnement, la répartition de puissance en respectant les contraintes de consommation et de dépollution. De même, un classement des états optimaux de la chaîne cinématique, doit également tenir compte de l'état de charge de la batterie.

La chaîne cinématique d'un véhicule thermique et d'un véhicule hybride présentent par ailleurs des différences importantes :
- sur un véhicule hybride, le moteur thermique n'est pas la seule source de puissance motrice ;
- pour une même puissance souhaitée, il y plusieurs combinaisons possibles entre la puissance délivrée par le moteur thermique et celle délivrée par le(s) moteur(s) électrique (s) ;
- selon la définition technique envisagée, la puissance de la machine électrique transite, ou non, par la transmission ;
- les limitations max/min statiques et dynamiques du GMP (groupe motopropulseur) hybride dépendent de l'état de charge de la batterie, de sorte qu'elles varient dans le temps ;
- le mode Traction électrique ou ZEV pour « Zéro Emission Vehicle » regroupe un ou plusieurs états de la chaîne cinématique spécifiques, au même titre que les rapports discrets du moteur thermique.

De manière générale, les phénomènes acoustiques, l'agrément de conduite, de même que le niveau de consommation et de dépollution, répondent à des contraintes particulières sur un véhicule hybride. Pour un même point de fonctionnement (Vitesse, Puissance motrice), le niveau acoustique du GMP (groupe motopropulseur) dépend de la répartition entre la puissance électrique et la puissance thermique, le moteur électrique étant plus silencieux. L'agrément de conduite, lié aux performances du GMP, dépend de l'état de charge de la batterie. Si elle est chargée, il est possible d'utiliser en même temps la puissance délivrée par le moteur électrique et par le moteur thermique. Si elle est déchargée, la puissance globale disponible est réduite, car la seule source d'énergie disponible est le moteur thermique, avec une diminution possible des performances. Enfin, les exigences de consommation et de dépollution sont prises en compte dans les lois de gestion d'énergie qui établissent sur chaque état hybride, la répartition entre la puissance délivrée par le moteur thermique et celle délivrée par les machines électriques, en fonction de l'état de charge de la batterie.

Par ailleurs, selon le type d'architecture hybride, les sources de motricité peuvent être implantées dans le véhicule dans différentes configurations. La, ou les, machine(s) électrique(s) sont par exemple associées aux roues arrières, au vilebrequin, à l'arbre secondaire de la boîte de vitesses, etc. Cependant, les états de la chaîne cinématique de tout véhicule hybride se définissent comme des combinaisons des organes de traction au travers, ou non, d'une transmission à plusieurs rapports. Deux états cible X et Y, peuvent ainsi être atteints de différentes manières à partir d'un état chaîne cinématique courant Z. Les changements d'état résultent de différents changements mécaniques dans la transmission, par exemple :
- Un couplage de la machine électrique sans changement de ratio pour le moteur thermique,
- un changement de rapport du moteur thermique avec le maintien du rapport de la machine électrique,
- Un changement de rapport de la machine électrique sans moteur thermique, etc.

Ains,i un changement depuis un état courant Z peut se dérouler avec une rupture totale de couple à la roue, avec une baisse du niveau de couple à la roue, ou encore sans aucune baisse du niveau de couple selon les états cible X ou Y, ou suivant les changements mécaniques réalisés par la transmission. Au travers de baisses significatives d'accélération non anticipées, les baisses ou les ruptures de couple à la roue pendant les changements d'états sont perçus négativement en termes d'agrément de conduite par le conducteur et ses passagers, et dégradent les performances, comme le brio du véhicule.

Le problème se rencontre par exemple sur une transmission hybride telle que décrite dans la publication WO2012131259. Ce problème est illustré de la manière suivante par la figure 1, sur laquelle on a fait apparaître les courbes d'accélération maximale sur différents modes cinématiques de la transmission. Si l'on considère qu'au point de fonctionnement 1 du schéma, l'état courant de la chaîne cinématique est un rapport électrique nommé ZEV1, et que le véhicule a atteint sa vitesse maximale sur cet état, la transmission doit basculer vers un autre état de la chaîne cinématique répondant aux contraintes d'agrément associées au point 1, mais également à l'optimisation énergétique du véhicule. A partir du point 1, les états nommés HYB23, TH2, HYB33 et ZEV3 correspondant respectivement à un premier rapport hybride, un rapport thermique, un deuxième rapport hybride et un autre rapport électrique, sont admissibles du point de vue de l'agrément de conduite. Cependant, ils offrent des prestations différentes, une fois établis. Par ailleurs, les passages sur HYB 23 et TH2 peuvent être réalisés sans rupture, ni baisse d'accélération du véhicule, tandis que les passages sur ZEV 3 et HYB 33 occasionnent une chute notable de l'accélération véhicule, car la réalisation de ces états implique un passage par l'état neutre de la transmission impliquant une rupture de couple totale aux roues. Si un critère d'optimisation énergétique préconise l'état ZEV3 ou l'état HYB33, la prestation de passage vers un de ces états sera dégradée par la rupture de couple, alors qu'un passage sur les deux autres états chaînes cinématiques offrirait une meilleure prestation client, et de meilleurs performances du véhicule.

Dans un tel contexte, on souhaite empêcher qu'un état de la chaîne cinématique éligible selon un critère lié à ses prestations, mais impliquant une baisse non tolérable ou une rupture totale de l'accélération du véhicule pour être établi, soit sélectionné comme consigne.

Un procédé de contrôle de changement d'état d'une chaîne cinématique de véhicule hybride conformément au préambule de la revendication 1 est présenté dans la publication FR 3 001 188 A1 afin de réduire un désagrément lié au changement d'état de la chaîne cinématique.

La présente invention vise à éviter l'accès à des états chaînes cinématiques provoquant une diminution de l'accélération véhicule trop importante. Elle y parvient en interdisant tout changement d'état provoquant une baisse ou une rupture de l'accélération du véhicule au-delà d'un seuil déterminé.

Dans ce but, l'invention propose que l'autorisation du passage d'un état courant de la chaîne cinématique sur un état cible de cette dernière dépende de la diminution de l'accélération du véhicule sur un état intermédiaire de la chaîne cinématique provoquant la plus faible accélération du véhicule pendant la transition entre l'état courant et l'état cible en calculant. la différence d'accélération du véhicule entre le point de fonctionnement effectif sur le rapport courant avant la transition, et un point de fonctionnement effectif sur l'état intermédiaire.

Selon un mode de réalisation préféré de l'invention, le calcul de la diminution d'accélération sur l'état intermédiaire dépend de l'état courant de la chaîne cinématique, d'une estimation des efforts résistants, de la consigne de force ou de couple aux roues du conducteur, et des forces maximales réalisables sur l'état courant et sur l'état intermédiaire.

Ce procédé est applicable sur l'ensemble des véhicules thermiques, hybrides et électriques équipés d'une transmission automatique, présentant ou non une rupture partielle ou totale du couple de traction et possédant au moins deux états distincts de la chaîne cinématique .

L'invention sera mieux comprise à la lecture de la description suivante d'un mode de réalisation non limitatif de celle-ci, en se reportant aux dessins annexés, sur lesquels :
- la figure 1 illustre le problème rencontré sur un exemple,
- la figure 2 est un logigramme du procédé de l'invention,

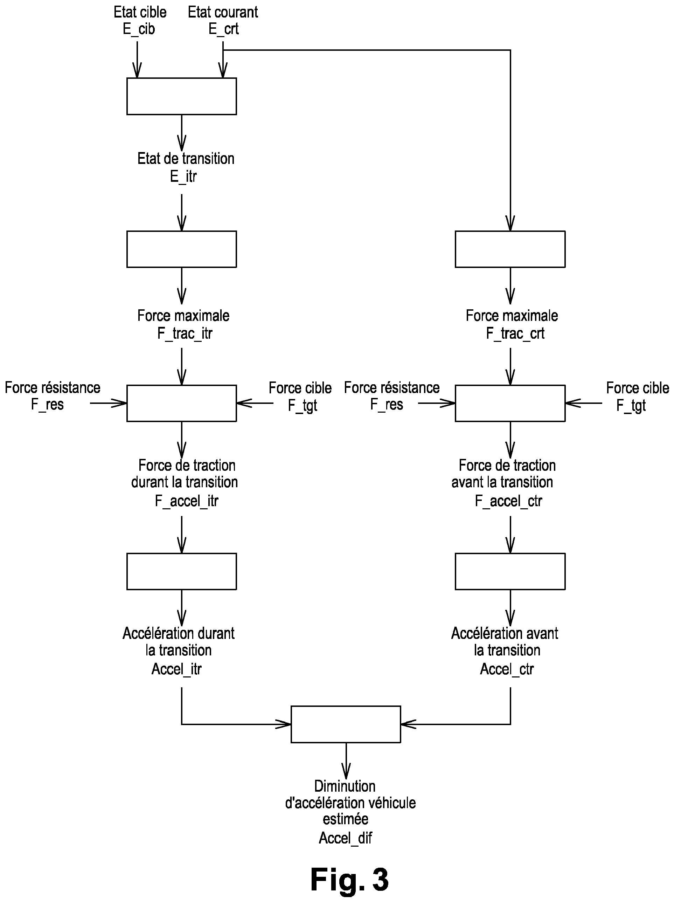

- les figures 3 et4 développent deux sous-ensembles de ce logigramme, et
- la Figure 5 illustre l'application du procédé à l'exemple cité.

Le procédé de l'invention contrôle les changements d'état d'une chaîne cinématique de véhicule reliant au moins un moteur thermique et/ou une machine électrique aux roues du véhicule par l'intermédiaire d'une transmission, assurant le transfert du couple du moteur thermique et/ou de la machine électrique en direction des roues sur un ou plusieurs rapports de démultiplication. Il se décompose en plusieurs étapes conduisant à l'interdiction ou à l'autorisation du passage de la chaîne cinématique de l'état courant E_crt sur un état cible E_cib, en fonction de la diminution de l'accélération du véhicule qui est provoquée par la transition. Cette stratégie s'applique de manière identique pour l'ensemble des états cibles potentiels de la chaîne cinématique. Toutefois, si l'état cible considéré correspond à l'état courant, le maintien de cet état n'est pas soumis à cette stratégie.

La première étape consiste à définir une donnée essentielle du passage de l'état courant E_crt vers un état cible E_cib. Il s'agit de l'état intermédiaire E_itr provoquant la plus faible accélération véhicule entre ces deux états. Dans la plupart des cas (mais non obligatoirement), c'est la position neutre de la transmission, notamment si celle-ci entraîne une rupture totale de couple ; dans d'autres cas, c'est l'état fournissant le couple minimal durant la transition, s'il n'y a qu'une rupture partielle ou nulle du couple pendant cette dernière. Conformément à l'invention, l'autorisation du passage de l'état courant sur un état cible dépend de la diminution de l'accélération du véhicule sur l'état intermédiaire E_itr provoquant la plus faible accélération du véhicule pendant la transition entre l'état courant E_crt et l'état cible disponible E_cib.

La seconde étape a pour but de calculer la diminution de l'accélération du véhicule, qui est due au passage de l'état E_crt à l'état E_cib. Cette diminution dépend avant tout de l'accélération avant et pendant le passage, et donc des forces appliquées au véhicule. Ces forces sont les efforts résistants totaux appliqués au véhicule F_res, la force de traction aux roues avant le changement, nommée F_trac_crt, et la force de traction aux roues pendant le changement, nommée F_trac_itr. La force de traction F_trac_itr est la force minimale entre la consigne de force de traction F_tgt et la force maximale possible de l'état intermédiaire E_itr. De manière analogue, la force F_trac_crt est la force minimale entre la consigne de force de traction F_tgt et la force maximale possible de l'état courant E_crt.

Au cours d'une seconde étape, on calcule la différence d'accélération du véhicule entre le point de fonctionnement effectif sur le rapport courant E_crt avant la transition, et un point de fonctionnement effectif sur l'état intermédiaire E_itr. La diminution d'accélération sur l'état intermédiaire dépend de l'état courant E_crt de la chaîne cinématique, d'une estimation des efforts résistants F_res, de la consigne de force ou de couple aux roues du conducteur F_tgt, et des forces maximales F_trac_crt et F_trac_itr, sur l'état courant et sur l'état intermédiaire.

Le séquencement de la deuxième étape est le suivant
a) calcul de la force servant à l'accélération du véhicule avant la transition (F_accel_crt) égale à la force de traction (F_trac_crt) diminuée de l'ensemble des forces résistantes (F_res),
b) calcul de l'accélération effective avant le changement Accel_crt, en fonction de l'inertie du véhicule et de la force F_accel_crt (Accel_crt = F_accel_crt / inertie_véhicule),
c) calcul de la force servant à l'accélération du véhicule pendant la transition (F_accel_itr) : il s'agit de la force de traction F_trac_itr soustraite de l'ensemble des forces résistantes F_res,
d) calcul de l'accélération effective pendant le changement Accel_itr en fonction de l'inertie du véhicule et de la force F_accel_itr (Accel_itr = F_accel_itr / inertie_véhicule),
e) calcul de la diminution de l'accélération du véhicule due à la transition de E_crt à E_cib : Accel_dif = Accel_crt-Accel_itr.

La différence d'accélération entre l'état courant et l'état intermédiaire est comparée à un seuil de diminution maximale d'accélération autorisée (Accel dif max aut), dépendant de l'état courant (E_crt) et de l'état cible (E_cib). Une troisième étape consiste à définir le seuil de diminution maximale de l'accélération véhicule autorisée, Accel_dif_max_aut. Ce seuil dépend des états E_cib et E_crt, et représente la diminution d'accélération maximale tolérée sur l'état cible.

La quatrième et dernière étape de ce séquencement consiste à arbitrer les autorisations ou interdictions des états cibles de la chaîne cinématique. La transition vers l'état cible E_cib est interdite à partir de l'état courant E_crt si la différence d'accélération Accel_dif est supérieure au seuil Accel_dif_max_aut. Elle est autorisée si cette différence est inférieure ou égale à ce même seuil.

Enfin, des mesures de temporisation sont mises en place pour éviter les enchaînements successifs de changements d'état, qui pourraient résulter de l'application de cette stratégie. En particulier, lorsqu'un changement vers un état cible A autre que l'état B, qui aurait été choisi sans l'application du procédé, vient d'être effectué, la transition vers cet état B est interdite momentanément, même si elle est désormais autorisée à partir de l'état A. Cette interdiction est maintenue pendant une temporisation dont la durée est paramétrable. En d'autres termes, une transition d'un état courant A vers un état cible B qui a été écarté lorsque la transition précédente vers l'état A a été effectuée, mais qui serait autorisée à partir de l'état A, est suspendue pendant une période de temporisation.

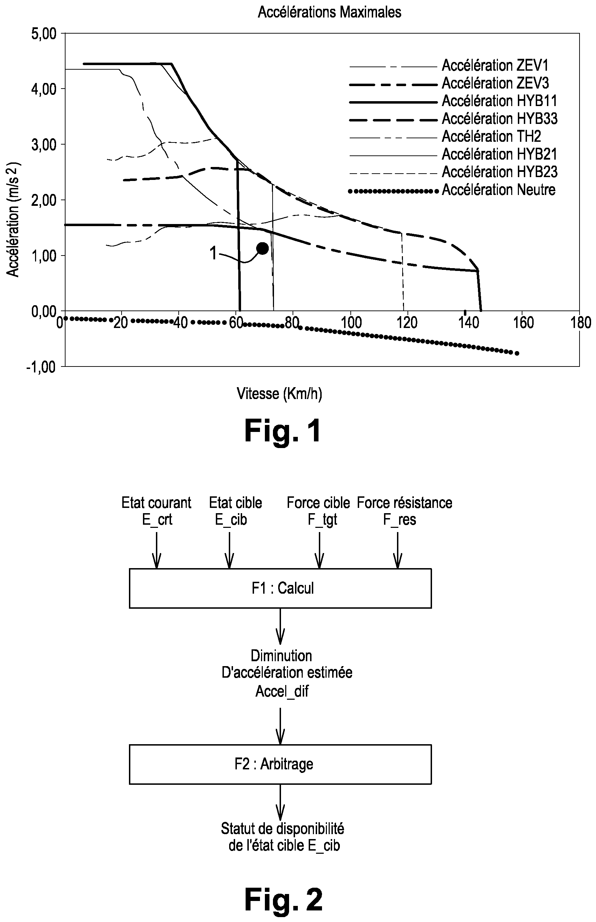

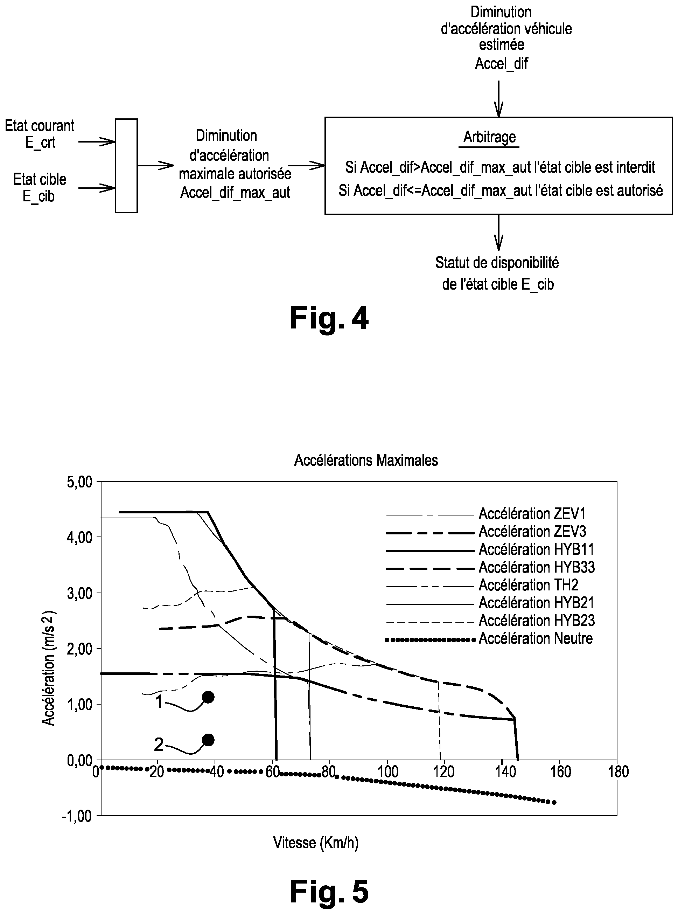

Sur la figure 5, on retrouve les courbes d'accélération de la figure 1. En considérant que les deux points de fonctionnements courants 1 et 2 sont sur l'état courant HYB11, les tableaux suivant illustrent l'application du procédé pour un passage vers l'état cible ZEV3 et HYB 21 sur le point 1 (tableau 1) et sur le point 2 (tableau 2).

**tableau 1**

| Cas | 1 | 2 |
|---|---|---|
| E_crt | HYB 11 | HYB 11 |
| E_cib | ZEV 3 | HYB 21 |
| E_itr | Neutre | ZEV1 |
| F_res (N) | 140 | 140 |
| F_tgt (N) | 1400 | 1400 |
| Accel_crt (m/s²) | 0,9 | 0,9 |
| Accel_itr (m/s²) | -0,1 | 0,9 |
| Accel_dif (m/s²) | 1 | 0 |
| Accel_dif_max_aut (m/s²) | 0,75 | 1 |
| E_cib | Interdit | Autorisé |

**tableau 2**

| Cas | **1** | 2 |
|---|---|---|
| E_crt | HYB 11 | HYB 11 |
| E_cib | ZEV3 | HYB21 |
| E_itr | Neutre | ZEV1 |
| F_res (N) | 140 | 140 |
| F_tgt (N) | 280 | 280 |
| Accel_crt (m/s²) | 0,1 | 0,1 |
| Accel_itr (m/s²) | -0,1 | 0,1 |
| Accel_dif (m/s²) | 0,2 | 0 |
| Accel_dif_max_aut (m/s²) | 0,75 | 1 |
| E_cib | Autorisé | Autorisé |

A partir du point de fonctionnement 1 de la figure 5,
a) dans le cas 1 où la cible est ZEV3, l'accès à l'état ZEV3 est interdit car il provoquerait une diminution de l'accélération plus grande que le seuil maximal Accel_dif_max_aut; en effet :
   - l'état intermédiaire E_itr pour aller à l'état cible E_cib ZEV3 est l'état neutre,
   - l'accélération estimée sur l'état courant est Accel_crt=0,9 m/s²,
   - l'accélération estimée sur l'état transitoire neutre est Accel_itr=-0,1 m/s²,
   - la diminution de l'accélération véhicule est Accel_dif= 1 m/s²,
   - la diminution maximale d'accélération véhicule autorisée Accel_dif_max_aut est de 0,75 m/s² pour aller de HYB11 à ZEV3,
b) dans le cas 2 où la cible est HYB21, l'état est autorisé car la diminution de l'accélération véhicule est en dessous du seuil maximal ; en effet :
   - l'état intermédiaire E_itr pour aller à l'état cible E_cib HYB21 est l'état ZEV1,
   - l'accélération estimée sur l'état courant est Accel_crt=0,9 m/s²,
   - l'accélération estimée sur l'état transitoire ZEV1 est Accel_itr=0,9m/s²,
   - la diminution de l'accélération véhicule est Accel_dif= 0 m/s²,
   - la diminution maximale d'accélération véhicule autorisée Accel_dif_max_aut est de 1 m/s² pour aller de HYB11 à HYB21,

A partir du point de fonctionnement 2 de la figure 5,
a) dans le cas 1, où la cible est ZEV3, l'état est autorisé car la diminution de l'accélération véhicule est en dessous du seuil maximal ; en effet :
   - l'état intermédiaire E_itr pour aller à l'état cible E_cib ZEV3 est l'état neutre,
   - l'accélération estimée sur l'état courant est Accel_crt=0,1 m/s²,
   - l'accélération estimée sur l'état transitoire neutre est Accel_itr=-0,1 m/s²,
   - la diminution de l'accélération Accel_dif= 0,2 m/s²,
   - la diminution maximale d'accélération véhicule autorisée Accel_dif_max_aut est de 0,75 m/s² pour aller de HYB11 à ZEV3,
b) dans le cas 2 où la cible est HYB21 En conséquence, l'état est autorisé car la diminution de l'accélération véhicule est en dessous du seuil maximal Accel_dif_max_aut ; en effet :
   - l'état intermédiaire E_itr pour aller à l'état cible E_cib HYB21 est l'état ZEV1,
   - l'accélération estimée sur l'état courant est Accel_crt=0,1 m/s²,
   - l'accélération estimée sur l'état transitoire ZEV1 est Accel_crt=0,1m/s²,
   - la diminution de l'accélération Accel_dif= 0 m/s ²,
   - la diminution maximale d'accélération véhicule autorisée Accel_dif_max_aut est de 1 m/s² pour aller de HYB11 à HYB21,

En conclusion le procédé proposé présente de nombreux avantages, parmi lesquels il faut citer :
- sa facilité de mise en œuvre,
- son intervention en temps réel permettant de prendre en compte des paramètres véhicules évolutifs, comme les forces maximales sur les états de transitions, forces extérieures, etc.)
- son application sur l'ensemble des architectures hybrides, possédant une transmission avec au moins deux états distincts de la chaîne cinématique.

## Revendications

1. Procédé de contrôle des changements d'état d'une chaîne cinématique de véhicule reliant au moins un moteur thermique et/ou une machine électrique aux roues du véhicule par l'intermédiaire d'une transmission, assurant le transfert du couple du moteur thermique et/ou de la machine électrique en direction des roues sur un ou plusieurs rapports de démultiplication, **caractérisé en ce que** :
- l'autorisation du passage d'un état courant de la chaîne cinématique (E_crt) sur un état cible de cette dernière (E_cib) dépend de la diminution de l'accélération du véhicule sur un état intermédiaire de la chaîne cinématique (E_itr) provoquant la plus faible accélération du véhicule pendant la transition entre l'état courant (E_crt) et l'état cible (E_cib),
- cette diminution étant calculée comme la différence d'accélération du véhicule entre le point de fonctionnement effectif sur l'état courant (E_crt) avant la transition, et un point de fonctionnement effectif sur l'état intermédiaire (E_itr).

2. Procédé de contrôle selon la revendication 1, **caractérisé en ce que** le calcul de la diminution d'accélération sur l'état intermédiaire dépend de l'état courant (E_crt) de la chaîne cinématique, d'une estimation des efforts résistants (F_res), de la consigne de force ou de couple aux roues du conducteur F_tgt, et des forces maximales (F_trac_crt) et (F_trac_itr), sur l'état courant et sur l'état intermédiaire.

3. Procédé de contrôle selon la revendication 1 ou 2, **caractérisé en ce que** le calcul de la diminution d'accélération sur l'état intermédiaire comporte les étapes suivantes :
a) calcul de la force servant à l'accélération du véhicule avant la transition (F_accel_crt), égale à la force de traction (F_trac_crt) diminuée de l'ensemble des forces résistantes (F_res),
b) calcul de l'accélération effective avant le changement (Accel_crt), avant la transition, en fonction de la force F_accel_crt et de l'inertie du véhicule : Accel_crt = F_accel_crt / inertie_véhicule,
c) calcul de la force servant à l'accélération du véhicule pendant la transition (F_accel_itr), égale à la force de traction (F_trac_itr) diminuée de l'ensemble des forces résistantes (F_res),
d) calcul de l'accélération effective pendant le changement Accel_itr en fonction de l'inertie du véhicule et de la force F_accel_itr : Accel_itr = F_accel_itr / inertie_véhicule), et
e) calcul de la diminution de l'accélération du véhicule : Accel_dif = Accel_crt - Accel_itr.

4. Procédé de contrôle selon la revendication 1, 2 ou 3, **caractérisé en ce que** la différence d'accélération entre l'état courant (E_crt) et l'état intermédiaire (E_itr) est comparée à un seuil de diminution maximale d'accélération autorisée (Accel_dif_max_aut), dépendant de l'état courant (E_crt) et de l'état cible (E_cib).

5. Procédé de contrôle selon la revendication 4, **caractérisé en ce que** la transition vers l'état cible (E_cib) est interdite à partir de l'état courant si la différence d'accélération (Accel_dif) est supérieure au seuil (Accel_dif_max_aut) et **en ce que** cette transition est autorisée si cette différence est inférieure ou égale au même seuil.

6. Procédé de contrôle selon l'une des revendications précédentes, **caractérisé en ce que** une transition d'un état courant A vers un état cible B qui a été écartée lorsque la transition précédente vers le rapport A a été effectuée, mais qui serait autorisée à partir de celui-ci, est suspendue pendant une période de temporisation.

## Patentansprüche

1. Verfahren zur Steuerung der Zustandsänderungen eines Antriebsstrangs eines Fahrzeugs, der mindestens einen Verbrennungsmotor und/oder eine elektrische Maschine über ein Getriebe mit den Rädern des Fahrzeugs verbindet, das die Übertragung des Drehmoments des Verbrennungsmotors und/oder der elektrischen Maschine in Richtung der Räder in einem oder mehreren Übersetzungsverhältnissen gewährleistet, **dadurch gekennzeichnet, dass**:
- die Autorisierung des Übergangs von einem aktuellen Zustand des Antriebsstrangs (E_crt) in einen Zielzustand dieses letzteren (E_cib) von der Verringerung der Beschleunigung des Fahrzeugs in einem Zwischenzustand des Antriebsstrangs (E_itr) abhängt, der die geringste Beschleunigung des Fahrzeugs während des Übergangs zwischen dem aktuellen Zustand (E_crt) und dem Zielzustand (E_cib) bewirkt,
- wobei diese Verringerung als die Beschleunigungsdifferenz des Fahrzeugs zwischen dem effektiven Arbeitspunkt im aktuellen Zustand (E_crt) vor dem Übergang und einem effektiven Arbeitspunkt im Zwischenzustand (E_itr) berechnet wird.

2. Steuerverfahren nach Anspruch 1, **dadurch gekennzeichnet, dass** die Berechnung der Beschleunigungsverringerung im Zwischenzustand vom aktuellen Zustand (E_crt) des Antriebsstrangs, von einer Schätzung der Fahrwiderstände (F_res), von der Kraft- oder Drehmomentvorgabe an die Rädern des Fahrers F_tgt, und von den maximalen Kräften (F_trac_crt) und (F_trac_itr) im aktuellen Zustand und im Zwischenzustand abhängt.

3. Steuerverfahren nach Anspruch 1 oder 2, **dadurch gekennzeichnet, dass** die Berechnung der Beschleunigungsverringerung im Zwischenzustand die folgenden Schritte aufweist:
a) Berechnung der Kraft, die zur Beschleunigung des Fahrzeugs vor dem Übergang (F_accel_crt) dient, gleich der Zugkraft (F_trac_crt) verringert um die Gesamtheit der Widerstandskräfte (F_res),
b) Berechnung der effektiven Beschleunigung vor der Änderung (Accel_crt), vor dem Übergang, abhängig von der Kraft F_accel_crt und von der Trägheit des Fahrzeugs: Accel_crt = F_accel_crt/Trägheit_Fahrzeug,
c) Berechnung der Kraft, die zur Beschleunigung des Fahrzeugs während des Übergangs (F_accel_itr) dient, gleich der Zugkraft (F_trac_itr) verringert um die Gesamtheit der Widerstandskräfte (F_res),
d) Berechnung der effektiven Beschleunigung während der Änderung Accel_itr abhängig von der Trägheit des Fahrzeugs und von der Kraft F_accel_itr: Accel_itr / Trägheit_Fahrzeug), und
e) Berechnung der Verringerung der Beschleunigung des Fahrzeugs: Accel_dif = Accel_crt - Accel_itr.

4. Steuerverfahren nach Anspruch 1, 2 oder 3, **dadurch gekennzeichnet, dass** die Beschleunigungsdifferenz zwischen dem aktuellen Zustand (E_crt) und dem Zwischenzustand (E_itr) mit einer Schwelle autorisierter maximaler Beschleunigungsverringerung (Accel_dif_max_aut) verglichen wird, die vom aktuellen Zustand (E_crt) und vom Zielzustand (E_cib) abhängt.

5. Steuerverfahren nach Anspruch 4, **dadurch gekennzeichnet, dass** der Übergang in den Zielzustand (E_cib) ausgehend vom aktuellen Zustand verboten wird, wenn die Beschleunigungsdifferenz (Accel_dif) größer als die Schwelle (Accel_dif_max_aut) ist, und dass dieser Übergang autorisiert wird, wenn diese Differenz niedriger als die oder gleich derselben Schwelle ist.

6. Steuerverfahren nach einem der vorhergehenden Ansprüche, **dadurch gekennzeichnet, dass** ein Übergang von einem aktuellen Zustand A in einen Zielzustand B, der verworfen wurde, als der vorhergehende Übergang zum Verhältnis A ausgeführt worden war, der aber ausgehend von diesem autorisiert wäre, während einer Verzögerungsperiode ausgesetzt wird.

## Claims

1. Method for controlling state changes of a drivetrain of a vehicle connecting at least one internal combustion engine and/or one electrical machine to the wheels of the vehicle via a transmission, providing the transfer of torque from the internal combustion engine and/or from the electrical machine to the wheels in accordance with one or more gear ratios, **characterized in that**:
- the authorization to switch from a current state of the drivetrain (E_crt) to a target state of the latter (E_cib) depends on the reduction of the acceleration of the vehicle in an intermediate state of the drivetrain (E_itr) causing the lowest acceleration of the vehicle during the transition between the current state (E_crt) and the target state (E_cib),
- this reduction being computed as the acceleration difference of the vehicle between the effective operating point in the current state (E_crt) before the transition and an effective operating point in the intermediate state (E_itr).

2. Control method according to Claim 1, **characterized in that** the computation of the acceleration reduction in the intermediate state depends on the current state (E_crt) of the drivetrain, an estimate of the resisting forces (F_res), the target force or torque at the driver's wheels F_tgt and the maximum forces (F_trac_crt) and (F_trac_itr) in the current state and in the intermediate state.

3. Control method according to Claim 1 or 2, **characterized in that** the computation of the reduction of acceleration in the intermediate state includes the following steps:
a) computation of the force accelerating the vehicle before the transition (F_accel_crt), equal to the traction force (F_trac_crt) minus all the resisting forces (F_res),
b) computation of the effective acceleration before the switch (Accel_crt), before the transition, as a function of the force F_accel_crt and the inertia of the vehicle: Accel_crt = F_accel_crt / vehicle_inertia,
c) computation of the force accelerating the vehicle during the transition (F_accel_itr), equal to the traction force (F_trac_itr) minus all the resisting forces (F_res),
d) computation of the effective acceleration during the switch Accel_itr as a function of the inertia of the vehicle and the force F_accel_itr: Accel_itr = F_accel_itr / vehicle_inertia, and
e) computation of the reduction of the acceleration of the vehicle: Accel_dif = Accel_crt - Accel_itr.

4. Control method according to Claim 1, 2 or 3, **characterized in that** the acceleration difference between the current state (E_crt) and the intermediate state (E_itr) is compared to an authorized maximum acceleration reduction threshold (Accel_dif_max_aut) depending on the current state (E_crt) and the target state (E_cib).

5. Control method according to Claim 4, **characterized in that** the transition to the target state (E_cib) is prohibited from the current state if the acceleration difference (Accel_dif) is above the threshold (Accel_dif_max_aut) and **in that** this transition is authorized if this difference is below or equal to the same threshold.

6. Control method according to any one of the preceding claims, **characterized in that** a transition from a current state A to a target state B that was set aside when the preceding transition to the ratio A had been effected but that would be authorized from the latter is suspended during a time-delay period.
